# EUROPEAN PATENT SPECIFICATION

(11) **EP 1 491 782 B1**
(45) Date of publication and mention of the grant of the patent: **15.08.2007**
(21) Application number: 03014287.1
(22) Date of filing: 25.06.2003
(51) Int. Cl.: F16C 11/06

(54) **Arrangement for connecting a rod end to a headed pin and method of manufacture**
Einrichtung zum Verbinden einen Betätigungsorgan zu einem Kugelkopf, und Verfahren zur Herstellung
Système de raccordement d'une tige de commande à une tête de rotule, et procédé de fabrication

(43) Date of publication of application: 29.12.2004
(73) Proprietor: Dura Global Technologies, Inc., Rochester Hills, Michigan 48309 (US)
(72) Inventor: Ruhlander, Gregory P., Hannibal, MO 63401 (US)
(74) Representative: Schaumburg, Thoenes, Thurn, Landskron

(56) References cited:
- EP-A- 0 800 010
- DE-A- 19 717 446
- DE-A- 19 731 039
- DE-A- 19 813 721
- DE-A- 19 927 055
- FR-A- 2 355 197
- FR-A- 2 634 839
- US-A- 4 581 953
- US-A- 5 682 798

## Description

### Cross Reference to Related Application

This application claims the benefit of U.S. provisional applications Serial No. 60/386,986, filed June 7, 2002 and Serial No. 60/400,082, filed July 31, 2002.

### Background of the Invention

This invention concerns rod end terminal connections commonly used to connect control rods to pins mounted to automobile transmission levers and the like to enable shifting of the transmission by the driver of the automobile. The pin is retained in a housing by a ball feature head on the pin snap fit to retention features on the housing. It has become standard practice to interpose a vibration isolator between the connected rod and pin to prevent vibrations from being felt by the driver when grasping a shifter or other member. See U.S. patent 4,581,953 for an example of such a connection.

The vibration isolator is usually constructed of a soft compressible material and excessive lash can result if the isolator material is directly contacted by the pin.

Such connections have been provided by assembling several parts together, and the necessary clearances for assembly also contribute to excessive lash at the connection.

The cost of manufacturing such linkages typically is high due to the need to assemble several components, and the need to insure that proper assembly of the components has been accomplished.

Another difficulty is encountered in designing the usually snap fit assembled pin and rod connection so that the force to assemble the connection must be low while the force resisting disconnection of the components must be much higher.

Document EP-A-0 800 010 is closest prior art and defines the generic parts of claims 1 and 11.

It is the object of the present invention to provide an arrangement for providing a connection between a pin and control rod including a vibration isolator which minimizes lash between the connected components.

It is a further object to provide such an arrangement which can be manufactured at low cost.

It is yet another object to provide a snap fit pin-rod connection in which a desired greater separation force and lesser assembly force can be easily designed for.

These objects are solved by the features of apparatus claim 1 and by the features of method claim 11. Further developments are defined in the dependent claims.

### Summary of the Invention

These and other objects which will become apparent upon a reading of the following specification and claims are achieved by an arrangement for establishing a rod end terminal connection having a vibration isolator of minimal thickness interposed between the rod and an overmolded minimally compressible hard plastic housing capturing the rod end and a vibration isolator interposed between the rod end and a pin receiving cavity defined by a hard plastic structure enclosed within the housing. Preferably the vibration isolator is itself overmolded onto the rod end, received in grooves in the rod and to be securely locked thereto. The hard plastic defined cavity is configured to receive the pin and a plurality of integral arcuate prongs are arranged about the inside of the cavity. The prongs are readily deflectable outwardly engagement of the head of the pin with sloping prong surfaces to accommodate insertion of the pin, but pin movement out is resisted by flat prong ends which requires application of a desired high extraction force to deflect the prongs and allow removal of the pin.

The overmolding of the hard plastic housing eliminates assembly of separate parts as well as eliminating clearances and lash resulting from having separate parts. The housing opening has an overlying web blocking entrance of the pin into the cavity from the wrong side to insure insertion of the pin into the housing from the proper side.

### Description of the Drawings

Figure 1 is a perspective view of an arrangement for establishing rod end head pin connection according to the invention.
Figure 2 is a plan view of the arrangement shown in Figure 1 with a fragmentary view of a rod end.
Figure 3 is a vertical sectional view taken through the rod end terminal connection shown in Figure 1.
Figure 4 is a horizontal sectional view taken through the rod end terminal connection shown in Figure 1.
Figure 5 is a fragmentary partially sectional perspective view from one side of the connection and mated pin shown in Figures 1-4.
Figure 6 is a fragmentary partially sectional endwise perspective view of the connection shown in Figures 1-5.
Figure 7 is a fragmentary plan view of a connection with a mating pin according to a second embodiment of the invention.
Figure 8 is a view of a vertical section through the connection shown in Figure 1.
Figure 9 is a plan view of an assembled inner core piece and vibration isolator components included in the connection shown in Figures 7 and 8.
Figure 10 is a side elevational view of the assembled inner piece core and vibration isolator components shown in Figure 9.
Figure 11 is a perspective view of the inner core and assembled isolator components shown in Figures 9 and 10.
Figure 12 is a perspective fragmentary view of the rod and terminal connection and mating pin shown in Figures 7 and 8.

### Detailed Description

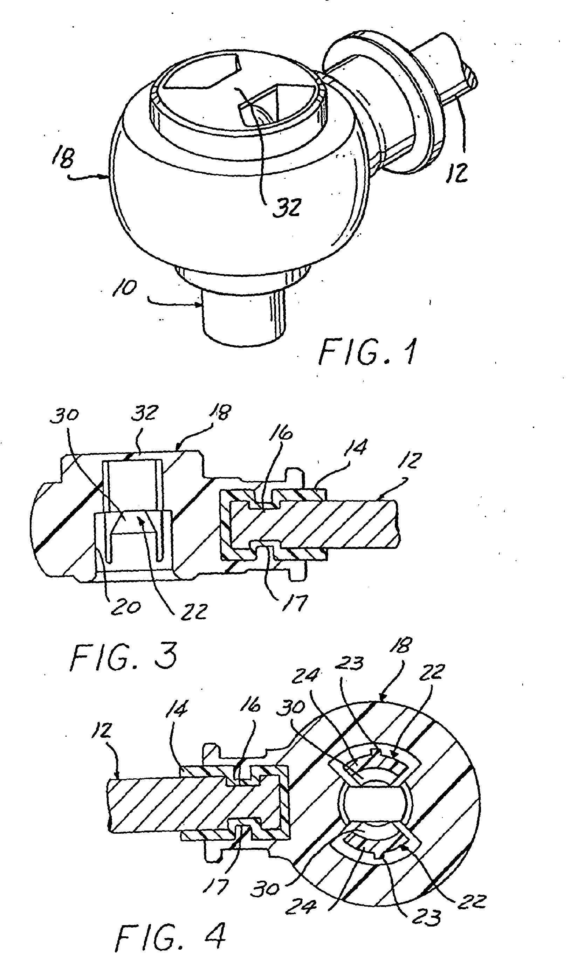

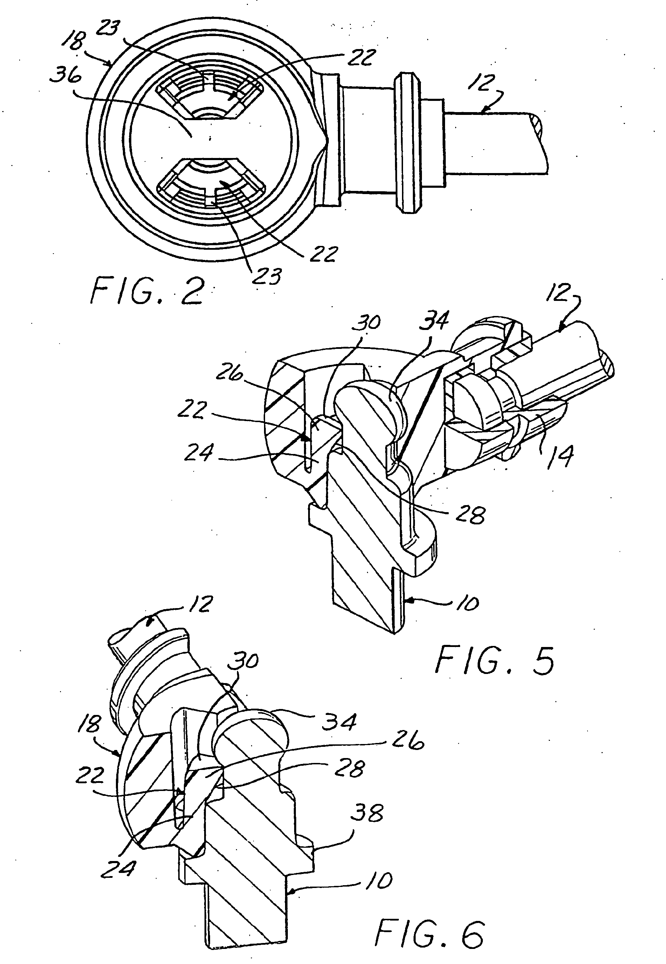

Referring to the drawings, and particularly Figures 1-6, the present invention provides an arrangement for establishing a connection between a headed pin 10 and one end of a steel control rod 12. Such connections are commonly used to couple a transmission control rod to an automotive transmission lever by a pin allowing relative rotation. Other control linkage systems for automotive and other applications widely use such connections which allow a changing angle of the control rod on the pin as it is advanced retracted.

This connection includes a thin walled (approximately 1 mm thick) soft elastomeric vibration isolator 14 preferably molded in place onto the one end of the control rod 12, with a recess 16 on the one end of the rod 12 keying the vibration isolator 14 to insure retention thereon. The recess 16 also forms an annular feature 17 in the vibration isolator. The vibration isolator 14 could also be separate molded and assembled onto the one end of the control rod 12 (a suitable material is Bayer Desmopan 453 polyester polyethylene based grade Shore hardness scale 53D (ASTM D2240)).

A pin receiver housing 18 is molded over the vibration isolator 14 and projects in a lengthwise direction away from the one end of the rod 12 to offset a hard plastic structure defining a pin receiving cavity 20 extending in a normal direction from the longitudinal axis of the control rod 12.

A portion of the housing 18 is received into the annular recess 17 formed in the vibration isolator 14 to be positively keyed thereto for secure retention.

The housing 18 is molded from a hard plastic such as Dow Vydyne R533 (Nylon 66% graphite filled (33%), Rockwell hardness scale M95 (ASTM D785).

A pair of pin retention features comprising arcuate prongs 22 are integrally formed on opposite sides of the cavity 20. Each prong 22 includes an axially extending base wall 24 spaced inwardly from the inside of the housing 18 to create a space allowing a radially outward deflection thereof.

A radially inward projecting lip portion 26 extends from the free end of the base wall 24, having a sloping undersurface 28 and a flat end surface 30 at the top as viewed in the drawings.

The lower end of the cavity 20 is open while a web 32 extends thereacross at the top to provide an orientation feature insuring correct assembly with the pin 10 able to be inserted only from below as seen in the drawings.

The pin 10 has a spherical head 34 which when inserted into the cavity 20 deflects the prongs 22 radially outward facilitated by the sloping undersurface 28 of the prongs being cammed outwardly by the spherically curving head 34. Integral ribs 23 limit outward deflection of the prongs 22.

After the head 34 is inserted sufficiently, the head 34 passes lips 26 of the prongs 22 allowing the prongs 22 to snap back to present the flat end face to the undersurface of the head 34.

A flange 38 on the pin 10 limits further insertion travel of the pin 34 by engaging the bottom 40 of the housing 18.

The insertion force required to install the pin 10 is much less than the force necessary to remove the pin 10 as a result of the sloping undersurface 28 and the flat end face 30. By varying the thickness of the wall 24, any particular insertion force maximum and extraction force minimum can be designed for to meet the application requirements. The wall 24 is placed in bending by the camming out of the prongs 22 as the ball head 34 is inserted.

The manufacturing steps are as follows:

The manufacturing process involves molding the vibration isolator 14 to the one end of the rod 12.

This subassembly is then placed in a mold and housing 18 is overmolded around the isolator-rod subassembly, the housing 18 having a portion located at one end of the rod 12 and formed with a socket opening with radially inwardly projecting engagement prongs for securing the pin. Since the housing 18 is molded from a hard plastic material, a low installation force for installing the pin can be achieved compared with much higher extraction forces required to separate the housing 18 from the pin 10.

The specific manufacturing process steps arc as follows:

The vibration isolator 14 is installed around the end of the steel rod 12. The groove 16 in the end of the rod 12 will match up to an inner ridge on the isolator. The vibration isolator 14 is molded around the end of the steel rod 12 with the groove and ridge matching.

Once the vibration isolator 14 rod 12 subassembly is made, molding of the final terminal assembly takes place. The vibration isolator 14 rod 12 subassembly is placed in the mold into a predetermined position. No special position or orientation is needed. The prongs 22 and load feature of the housing 18 is then molded to create the final assembly. This molding process interlocks the vibration isolator 14 rod 12 subassembly with the newly molded housing 18.

This connection and method provides several advantages. The first is that the hard plastic housing 18 with engagement prongs 22 comprise a socket contacting the pin 10, allowing the design of the prongs 22 to set the amount of installation and extraction force desired. By changing the prong design, i.e., the thickness of the wall, the amount of installation load required to secure the pin 10 can be reduced to meet any requirements and still maintain the required minimum extraction force.

The second advantage is that by molding the housing 18 around the vibration isolator 14 and steel rod end, this will provide increased strength to the rod end assembly and ensure that the housing 18, vibration isolator 14, and steel rod 12 are securely assembled. This design will also interlock these components to eliminate any tolerance gaps between individual parts. Prior designs had the possibility for tolerance gaps between parts, which will cause free play in the system known as "lash".

The third advantage is that the vibration isolator 14 is wrapped around the steel rod 12 to avoid direct contact with the pin 10. The vibration isolator 14 is molded with a small cross section wall to lower the thickness of material subject to compression. This will lower system lash and while still maintaining adequate vibration dampening capabilities.

The fourth advantage is a reduction in manufacturing cost. By molding the housing 18 over the vibration isolator/steel rod subassembly there is a reduction in cost for manufacturing the connection.

The fifth advantage is obtained by the addition of the orientation feature 36 to the housing 18. By adding this feature integrally the housing 18 can only go onto the pin 10 in one direction. Previously this was done by installing a separate component, increasing the cost of manufacture.

This design will make it easier to install on the vehicle, reduces cost, and reduces the number of parts in the assembly.

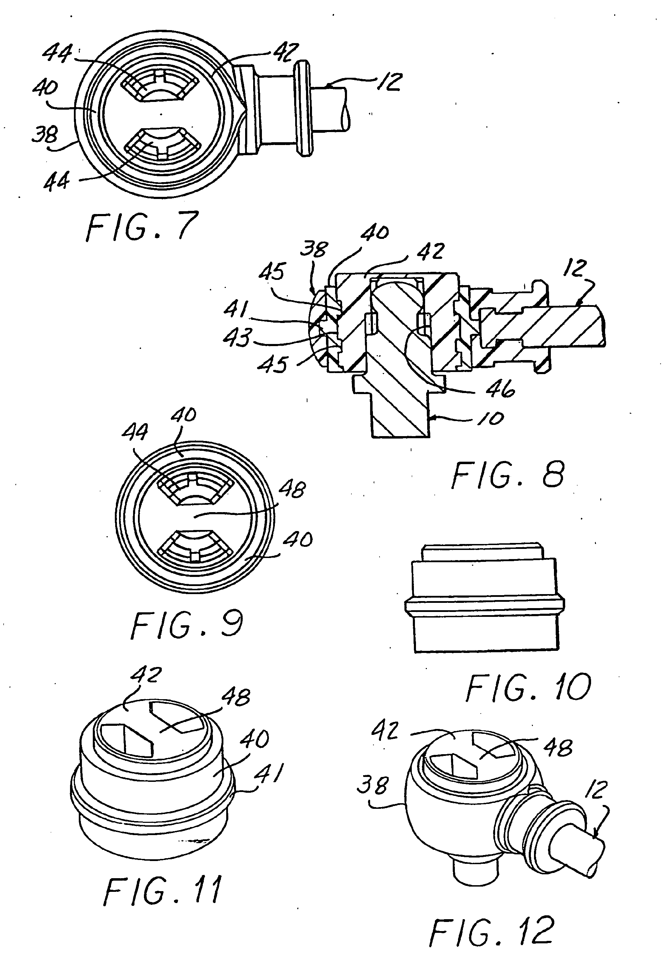

The second embodiment is shown in Figures 7-12, in which a hard plastic housing 38 is directly molded to one end of the control rod 12.

The ring shaped vibration isolator 40 is assembled onto a generally cylindrical hard plastic core piece 42 separately molded. The housing 38 is molded over the vibration isolator 40. Thus, the vibration isolator 40 does not directly contact the pin 10.

The core piece 42 has a central pin receiving cavity 46 formed with inwardly facing deflectable prongs 44 and orientation feature 48 as in the first described embodiment.

A ridge 43 on the core piece 42 forms grooves 45 matching grooves on the vibration isolator 40 on the core piece 42 and, together with a ridge 41 on the vibration isolator 40, these ensure mutual retention to the overmolded housing 38.

The vibration isolator 40 is installed around the inner core piece 42. The grooves 45 match up on both parts. The vibration isolator 40 is fully assembled around the inner core piece 42 and the grooves matched. Direction does not matter since the vibration isolator 40 is symmetrical and will go on either direction.

The inner core piece subassembly is placed in the mold along with the groove end of the steel rod 12. The inner core piece subassembly is installed on a special pin in the mold. This special pin correctly positions the inner core piece subassembly so that the load path feature of the inner core piece 42 is in an axial line with the steel rod 12. This will insure that the contact prongs 44 will be positioned 90 degrees to the steel rod 12.

Once the inner core piece subassembly is in place, the steel rod 12 is placed in the mold. The rod 12 is positioned so that the rod end contacts the ridge 43 vibration isolator 40. This will serve as a position stop for the steel rod 12. This stop feature will make it easier for the operator to properly place the steel rod 12 for the final molding.

Once the steel rod 12 and the inner core piece subassembly are correctly in place, the outer housing 38 is molded over these two other components. This molding process interlocks the inner core piece subassembly and the steel rod to form the final terminal rod assembly.

## Claims

1. An arrangement for connecting a one end of a control rod (12) to a headed pin (10) to enable driving of said pin (10) by motion of said control rod (12) comprising:
a core structure defining a pin receiving cavity (20, 46) formed therein with retention features (22, 44) around said cavity (20, 46) engaging said headed pin (10) so as to be retained therein;
a soft elastomeric vibration isolator (14, 40) interposed between said cavity defining core structure and said one end of said control rod (12);
a housing (18, 38) molded over said vibration isolator (14, 40) and also over said one end of said rod (12) to be joined together, said housing (18, 40) surrounding said core structure,
**characterized in that** said core structure is molded as an integral part of said housing (18, 38), and that said vibration isolator (14) extends completely around said one end of said rod (12), and said housing (18) is molded over said vibration isolator (14).

2. The arrangement according to claim 1 wherein said core structure is defined by a portion of said housing (18, 38).

3. The arrangement according to claim 1 or 2 wherein one end of said rod (12) has a groove (16) formed therein, and said vibration isolator (14) is fit into said groove (16), said vibration isolator (14) having external ridges forming a groove (17) with said housing (18) molded into said groove (17).

4. The arrangement according to claim 3 wherein said vibration isolator (14) has a wall thickness on the order of one millimeter.

5. The arrangement according to claim 1 wherein said core structure comprises a separate generally cylindrical core piece (42), and wherein said vibration isolator (40) comprises a ring on said core piece (42), said housing (38) molded over said vibration isolator (40).

6. The arrangement according to claim 1 wherein said core structure is formed of a hard plastic.

7. The arrangement according to claim 1 wherein said core structure is defined by one hard plastic housing portion extending from another housing portion overmolded to said one end of said rod (12), said one housing portion having said pin receiving cavity (46) therein in a portion spaced from said one end of said rod (12).

8. The arrangement according to claim 7 wherein said retention features comprise prongs (44) projecting into said cavity (46) and having radially deflectable portions able to receive a headed portion on said pin (10) and allow passage thereof, and engaging said head of said pin (10) after passage thereof.

9. The arrangement according to claim 8 wherein said prongs (44) are each formed with an axially extending base wall (24) radially spaced from said core portion (42) and also having a lip (26) projecting inwardly from said wall (24) having a sloping under surface (28) engaged by said head on said pin (10) to cause said radial deflection of said associated prong (44), and a flat surface (30) engaging said head after said pin head has been inserted past said prongs (44) to retain said pin in said cavity (46).

10. The arrangement according to claim 1 further including a web (32) extending over said cavity (20) on one side to prevent insertion of said pin (10) from said one side.

11. A method of constructing a driving connection between one end of a control rod (12) and a headed pin (10), comprising the steps of:
molding a housing (18, 38) to extend over said one end of said control rod (12);
forming a cavity (20, 46) defined by hard plastic structure located within said housing (18, 38) offset from said one end of said rod (12) and configured to receive said headed pin (10);
forming retention features within said cavity (20, 46) engaging said headed pin (10) upon insertion therein to retain the same;
interposing a soft elastomeric vibration isolator (14, 40) between said hard plastic structure defining said cavity (20, 46) and said one end of said rod (12) and surrounding said vibration isolator (14, 40) with said housing (18, 38) to thereby join together said housing (18, 38), said one end of said rod (12) and said vibration isolator (14, 40),
**characterized by** the steps of locating said vibration isolator (14) on said one end of said rod (12) and molding said housing (18) over said vibration isolator (14) on said rod (12).

12. The method according to claim 11 wherein said step of forming said cavity (20) is included in the step of molding said housing (18) wherein said housing (18) is molded from hard plastic and has a portion which defines said cavity (20).

13. The method according to claim 11 further including the step of molding said vibration isolator (14) as a tubular structure disposed over said one end of said prior to molding said housing (18) over said vibration isolator (14).

14. The method according to claim 11 further including the steps of separately molding a core piece (42) having said cavity (46) defined therein and molding said housing (38) around said core piece (42).

15. The method according to claim 13 wherein in said step of molding said vibration isolator (40) to said one end of said rod (12), said vibration isolator (40) is formed with a thin wall on the order of one millimeter in thickness.

16. The method according to claim 11 wherein said step of forming retention feature comprises the step of molding a plurality of integral prongs (22, 44) in said hard plastic structure extending radially inward into said cavity (20, 46) configured to engage a head portion of said pin (10) and be deflected radially outward thereby to allow passage of said head portion and to thereafter engage said head portion to retain the same in said cavity.

17. The method according to claim 16 wherein said prong molding step includes forming a sloping under surface (28) on said prongs (22, 44) to aid in producing radial outward deflection by passage of said pin head portion, and a flat surface (30) on the end thereof engaging said pin head portion to resist extraction whereby a much greater force is required for extraction than for insertion of said pin (10).

## Patentansprüche

1. Anordnung zum Verbinden eines Endes einer Steuerstange (12) mit einem Kopfbolzen (10), um einen Antrieb des Bolzens (10) durch eine Bewegung der Steuerstange (12) zu ermöglichen, umfassend:
eine Kernstruktur, die einen in ihr ausgebildeten, den Bolzen aufnehmenden Hohlraum (20, 46) definiert, mit Rückhaltemerkmalen (22, 44) um den Hohlraum (20, 46) herum, die mit dem Kopfbolzen (10) in Eingriff kommen, so dass dieser darin gehalten wird,
einen weichen elastomeren Vibrationsisolator (14, 40), der zwischen der den Hohlraum definierenden Kernstruktur und dem einen Ende der Steuerstange (12) angeordnet ist,
ein Gehäuse (18, 38), das über dem Vibrationsisolator (14, 40) und auch über dem einen Ende der Stange (12) geformt ist, um diese miteinander zu verbinden, wobei das Gehäuse (18, 38) die Kernstruktur umgibt,
**dadurch gekennzeichnet, dass** die Kernstruktur als integrales Teil des Gehäuses (18, 38) geformt ist und dass sich der Vibrationsisolator (14) vollständig um das eine Ende der Stange (12) erstreckt, und das Gehäuse (18) über den Vibrationsisolator (14) geformt wird.

2. Anordnung nach Anspruch 1, wobei die Kernstruktur von einem Abschnitt des Gehäuses (18, 38) definiert ist.

3. Anordnung nach Anspruch 1 oder Anspruch 2, wobei ein Ende der Stange (12) eine in sich ausgebildete Nut (16) hat, und der Vibrationsisolator (14) in diese Nut (16) eingepasst ist, wobei der Vibrationsisolator (14) äußere Rillen hat, die eine Nut (17) bilden, wobei das Gehäuse (18) in diese Nut (17) hinein geformt ist.

4. Anordnung nach Anspruch 3, wobei der Vibrationsisolator (14) eine Wandstärke in der Größenordnung von einem Millimeter hat.

5. Anordnung nach Anspruch 1, wobei die Kernstruktur ein getrenntes, im Allgemeinen zylindrisches Kernstück (42) umfasst, und wobei der Vibrationsisolator (40) einen Ring an dem Kernstück (42) umfasst, wobei das Gehäuse (38) über den Vibrationsisolator (40) geformt ist.

6. Anordnung nach Anspruch 1, wobei die Kernstruktur aus einem Hartkunststoff gebildet ist.

7. Anordnung nach Anspruch 1, wobei die Kernstruktur von einem Hartkunststoff-Gehäuseabschnitt definiert wird, der sich von einem anderen Gehäuseabschnitt erstreckt, der über dem einen Ende der Stange (12) geformt ist, wobei der eine Gehäuseabschnitt den den Bolzen aufnehmenden Hohlraum (46) in sich hat, in einem Abschnitt, der zu dem einen Ende der Stange (12) beabstandet ist.

8. Anordnung nach Anspruch 7, wobei die Rückhaltemerkmale Krallen (44) umfassen, die in den Hohlraum (46) vorstehen und radial biegsame Abschnitte haben, die in der Lage sind, einen Kopfabschnitt an dem Bolzen (10) aufzunehmen und dessen Durchtreten zu ermöglichen, und nach dessen Durchtritt mit dem Kopf des Bolzens (10) in Eingriff kommen.

9. Anordnung nach Anspruch 8, wobei die Krallen (44) jeweils mit einer sich axial erstreckenden Basiswand (24) ausgebildet sind, die radial zu dem Kernabschnitt (42) beabstandet ist und ferner eine Lippe (26) hat, die von der Wand (24) nach innen vorsteht und eine schräge Unterseite (28) hat, die mit dem Kopf an dem Bolzen (10) in Eingriff kommt, um das radiale Verbiegen der dazugehörigen Kralle (44) zu verursachen, sowie eine flache Oberfläche (30), die mit dem Kopf in Eingriff kommt, nachdem der Bolzenkopf vorbei an den Krallen (44) eingefügt wurde, um den Bolzen in dem Hohlraum (46) zu halten.

10. Anordnung nach Anspruch 1, ferner mit einem Netz (32), das sich über dem Hohlraum (20) auf einer Seite erstreckt, um das Einfügen des Bolzens (10) von dieser einen Seite aus zu verhindern.

11. Verfahren zum Herstellen einer Antriebsverbindung zwischen einem Ende einer Steuerstange (12) und einem Kopfbolzen (10), umfassend die Schritte:
Formen eines Gehäuses (18, 38), derart, dass es sich über das eine Ende der Steuerstange (12) erstreckt,
Ausbilden eines Hohlraums (20, 46), der von einer Hartkunststoff-Struktur begrenzt ist, in dem Gehäuse (18, 3 8) versetzt zu dem einen Ende der Stange (12) positioniert und so konfiguriert ist, dass er den Kopfbolzen (10) aufnimmt,
Ausbilden von Rückhaltemerkmalen in dem Hohlraum (20, 46), die mit dem Kopfbolzen (10) bei dessen Einfügen in denselben in Eingriff kommen, um ihn zurückzuhalten,
Anordnen eines weichen elastomeren Vibrationsisolators (14, 40) zwischen der Hartkunststoff-Struktur, die den Hohlraum (20, 46) definiert, und dem einen Ende der Stange (12) und Umschließen des Vibrationsisolators (14, 40) durch das Gehäuse (18, 38), um **dadurch** das Gehäuse (18, 38), das eine Ende der Stange (12) und den Vibrationsisolator (14, 40) miteinander zu verbinden,
**gekennzeichnet durch** die Schritte des Positionierens des Vibrationsisolators (14) an dem einen Ende der Stange (12) und des Formens des Gehäuses (18) über dem Vibrationsisolator (14) an der Stange (12).

12. Verfahren nach Anspruch 11, wobei der Schritt des Ausbildens des Hohlraums (20) in dem Schritt des Formens des Gehäuses (18) eingeschlossen ist, wobei das Gehäuse (18) aus Hartkunststoff geformt ist und einen Abschnitt hat, der den Hohlraum (20) definiert.

13. Verfahren nach Anspruch 11, ferner umfassend den Schritt des Formens des Vibrationsisolators (14) als rohrförmige Struktur, die über dem einen Ende der Stange angeordnet ist, vor dem Formen des Gehäuses (18) über dem Vibrationsisolator (14).

14. Verfahren nach Anspruch 11, ferner umfassend die Schritte des getrennten Formens eines Kernstückes (42), das den Hohlraum (46) in sich definiert hat, und des Formens des Gehäuses (38) um das Kernstück (42).

15. Verfahren nach Anspruch 13, wobei bei dem Schritt des Formens des Vibrationsisolators (40) an dem einen Ende der Stange (12) der Vibrationsisolator (40) mit einer dünnen Wand in der Größenordnung von einem Millimeter Stärke gebildet wird.

16. Verfahren nach Anspruch 11, wobei der Schritt des Ausbildens der Rückhaltemerkmale den Schritt des Formens einer Vielzahl von integralen Krallen (22, 44) in der Hartkunststoff-Struktur umfasst, die sich radial nach innen in den Hohlraum (20, 46) erstrecken und so konfiguriert sind, dass sie mit einem Kopfabschnitt des Bolzens (10) in Eingriff kommen und **dadurch** radial nach außen gebogen werden, um den Durchtritt des Kopfabschnittes zu ermöglichen und um anschließend mit dem Kopfabschnitt in Eingriff zu kommen, um denselben in dem Hohlraum zu halten.

17. Verfahren nach Anspruch 16, wobei der Schritt der Krallenformung das Formen einer schrägen Unterseite (28) an den Krallen (22, 44) einschließt, als Unterstützung beim Erzeugen des radial auswärts gerichteten Biegens durch den Durchtritt des Bolzenkopfabschnittes, sowie das Formen einer flachen Oberfläche (30) an deren Ende, die mit dem Bolzenkopfabschnitt in Eingriff kommt, um sich einem Herausziehen zu widersetzen, wodurch verglichen mit dem Einfügen des Bolzens (10) zum Herausziehen eine viel größere Kraft erforderlich ist.

## Revendications

1. Agencement permettant de raccorder une extrémité d'une tige de commande (12) à un axe à épaulement (10) pour permettre d'entraîner ledit axe (10) grâce au mouvement de ladite tige de commande (12), comprenant :
une structure centrale définissant une cavité de réception de l'axe (20, 46) formée dans celle-ci, avec des organes de retenue (22, 44) autour de ladite cavité (20, 46) s'engageant avec ledit axe à épaulement (10), de manière à être retenu dans celle-ci ;
un isolateur de vibrations élastomère souple (14, 40), intercalé entre ladite cavité définissant la structure centrale et ladite une extrémité de ladite tige de commande (12) ;
un carter (18, 38) moulé sur ledit isolateur de vibrations (14, 40) et également sur ladite une extrémité de ladite tige (12) devant être reliée à celui-ci, ledit carter (18, 40) entourant ladite structure centrale,
**caractérisé en ce que** ladite structure centrale est moulée comme partie intégrante dudit carter (18, 38), et **en ce que** ledit isolateur de vibrations (14) s'étend complètement autour de ladite une extrémité de ladite tige (12), et ledit carter (18) est moulé sur ledit isolateur de vibrations (14).

2. Agencement selon la revendication 1, dans lequel ladite structure centrale est définie par une partie dudit carter (18, 38).

3. Agencement selon la revendication 1 ou 2, dans lequel ladite une extrémité de ladite tige (12) a une rainure (16) formée dans celle-ci, et ledit isolateur de vibrations (14) est ajusté dans ladite rainure (16), ledit isolateur de vibrations (14) ayant des stries externes formant une rainure (17), ledit carter (18) étant moulé dans ladite rainure (17).

4. Agencement selon la revendication 3, dans lequel ledit isolateur de vibrations (14) a une épaisseur de paroi de l'ordre d'un millimètre.

5. Agencement selon la revendication 1, dans lequel ladite structure centrale comprend une pièce centrale généralement cylindrique (42), et dans lequel ledit isolateur de vibrations (40) comprend une bague sur ladite pièce centrale (42), ledit carter (38) étant moulé sur ledit isolateur de vibrations (40).

6. Agencement selon la revendication 1, dans lequel ladite structure centrale est formée d'une matière plastique dure.

7. Agencement selon la revendication 1, dans lequel ladite structure centrale est définie par une partie de carter en matière plastique dure s'étendant à partir d'une autre partie de carter surmoulée sur ladite une extrémité de ladite tige (12), ladite une partie de carter ayant dans celle-ci ladite cavité de réception de l'axe (46), dans une partie espacée de ladite une extrémité de ladite tige (12).

8. Agencement selon la revendication 7, dans lequel lesdits organes de retenue comprennent des griffes (44) faisant saillie dans ladite cavité (46), et ayant des parties susceptibles d'être déviées radialement, capables de recevoir une partie à épaulement prévue sur ledit axe (10), et de permettre le passage de celui-ci, et l'engagement dudit épaulement dudit axe (10) après le passage de celui-ci.

9. Agencement selon la revendication 8, dans lequel lesdites griffes (44) sont chacune dotées d'une paroi de base s'étendant axialement (24), espacée radialement de ladite partie centrale (42), et ayant une lèvre (26), faisant saillie vers l'intérieur à partir de ladite paroi (24), ayant une surface inférieure inclinée (28) engagée par ledit épaulement prévu sur ledit axe (10) pour entraîner ladite déviation radiale de ladite griffe associée (44), et une surface plate (30) s'engageant avec ledit épaulement, une fois que ledit épaulement a été inséré au-delà desdites griffes (44) pour retenir ledit axe dans ladite cavité (46).

10. Agencement selon la revendication 1, incluant en outre une âme (32) s'étendant sur ladite cavité (20) sur un côté pour empêcher l'insertion dudit axe (10) à partir dudit un côté.

11. Procédé de construction d'un raccord d'entraînement entre une extrémité d'une tige de commande (12) et un axe à épaulement (10), comprenant les étapes consistant à :
mouler un carter (18, 38) pour qu'il s'étende sur ladite une extrémité de la tige de commande (12) ;
former une cavité (20, 46) définie par une structure en matière plastique dure située à l'intérieur dudit carter (18, 38), décalée de ladite une extrémité de ladite tige (12), et configurée pour recevoir ledit axe à épaulement (10) ;
former des organes de retenue à l'intérieur de ladite cavité (20, 46), s'engageant avec ledit axe à épaulement (10) lors de l'insertion dans celle-ci pour retenir l'axe ;
intercaler un isolateur de vibrations élastomère souple (14, 40) entre ladite structure en matière plastique dure définissant ladite cavité (20, 46) et ladite une extrémité de ladite tige (12), et entourer ledit isolateur de vibrations (14, 40) avec ledit carter (18, 38), pour relier ainsi ensemble ledit carter (18, 38), ladite une extrémité de ladite tige (12), et ledit isolateur de vibrations (14, 40),
**caractérisé par** les étapes consistant à disposer ledit isolateur de vibrations (14) sur ladite extrémité de ladite tige (12), et à mouler ledit carter (18) autour dudit isolateur de vibrations (14) sur ladite tige (12).

12. Procédé selon la revendication 11, dans lequel ladite étape de formation de ladite cavité (20) est incluse dans l'étape de moulage dudit carter (18), au cours de laquelle ledit carter (18) est moulé à partir d'une matière plastique dure, et a une partie qui définit ladite cavité (20).

13. Procédé selon la revendication 11, incluant en outre l'étape de moulage dudit isolateur de vibrations (14) comme une structure tubulaire disposée autour de ladite une extrémité de celle-ci avant de mouler ledit carter (18) autour dudit isolateur de vibrations (14).

14. Procédé selon la revendication 11, incluant en outre les étapes de moulage, séparément, d'une pièce centrale (42) ayant ladite cavité (46) définie dans celle-ci, et de moulage dudit carter (38) tout autour de ladite pièce centrale (42).

15. Procédé selon la revendication 13, dans lequel, dans ladite étape de formation dudit isolateur de vibrations (40) à ladite extrémité de ladite tige (12), ledit isolateur de vibrations (40) est formé avec une paroi mince de l'ordre d'un millimètre d'épaisseur.

16. Procédé selon la revendication 11, dans lequel ladite étape de formation des organes de retenue comprend l'étape de moulage d'une pluralité de griffes (22, 44) d'un seul tenant dans ladite structure en matière plastique dure, s'étendant radialement vers l'intérieur dans ladite cavité (20, 46), configurées pour s'engager avec une partie d'épaulement dudit axe (10), et devant être déviées radialement vers l'extérieur, pour permettre le passage de ladite partie d'épaulement et pour s'engager ensuite avec ladite partie d'épaulement afin de la retenir dans ladite cavité.

17. Procédé selon la revendication 16, dans lequel ladite étape de moulage de griffes inclut la formation d'une surface inférieure inclinée (28) sur lesdites griffes (22, 44) pour faciliter la réalisation d'une déviation radiale vers l'extérieur grâce au passage de ladite partie d'épaulement de l'axe, et d'une surface plate (30) sur son extrémité s'engageant avec ladite partie d'épaulement de l'axe pour résister à l'extraction, grâce à quoi la force requise pour l'extraction est bien plus importante que celle qui est requise pour l'insertion dudit axe (10).
